# FASCICULE DE BREVET EUROPEEN

(11) **EP 3 350 745 B1**
(45) Date de publication et mention de la délivrance du brevet: **09.03.2022**
(21) Numéro de dépôt: 16769945.3
(22) Date de dépôt: 15.09.2016
(51) Int. Cl.: G06F 21/84, G06F 21/55

(54) **GESTION D'UN AFFICHAGE D'UNE VUE D'UNE APPLICATION SUR UN ÉCRAN D'UN DISPOSITIF ÉLECTRONIQUE DE SAISIE DE DONNÉES, PROCÉDÉ, DISPOSITIF ET PRODUIT PROGRAMME D'ORDINATEUR CORRESPONDANTS**
VERWALTUNG EINER ANZEIGE EINER ANSICHT EINER ANWENDUNG AUF EINEM SCHIRM EINER ELEKTRONISCHEN DATENEINGABEVORRICHTUNG, ENTSPRECHENDES VERFAHREN, VORRICHTUNG UND COMPUTERPROGRAMMPRODUKT
MANAGEMENT OF A DISPLAY OF A VIEW OF AN APPLICATION ON A SCREEN OF AN ELECTRONIC DATA INPUT DEVICE, CORRESPONDING METHOD, DEVICE AND COMPUTER PROGRAM PRODUCT

(30) Priorité: 15.09.2015 FR 1558647
(43) Date de publication de la demande: 25.07.2018
(73) Titulaire: Ingenico Group, 75015 Paris (FR)
(72) Inventeur: GERAUD, Rémi, 92160 Antony (FR); KOUDOUSSI, Hiba, 75012 Paris (FR)
(74) Mandataire: Vidon Brevets & Stratégie
(86) Numéro de dépôt international: PCT/EP2016/071897
(87) Numéro de publication internationale: WO 2017/046281

(56) Documents cités:
- WO-A2-2008/018055
- WO-A2-2008/114257
- US-A1- 2014 108 820

## Description

### 1. Domaine de l'invention

Le domaine de l'invention est celui des dispositifs électroniques de saisie de données utilisés pour effectuer des opérations qui font intervenir ou portent sur des objets de nature confidentielle. À titre illustratif, on peut citer les opérations de paiement qui font intervenir un numéro de carte bancaire ou qui portent sur une saisie de code confidentiel associé à une carte de paiement. D'autres opérations telles que par exemple des opérations d'ordre médical ou civil, qui portent sur des données biologiques ou patrimoniales propres à un individu, sont également concernées par la présente technique.

### 2. Art antérieur

Certains dispositifs électroniques de saisie de données, comme les terminaux de paiement par exemple, sont spécifiquement conçus, tant sur le plan matériel que logiciel, pour offrir une protection la plus optimale possible des données confidentielles qui sont susceptibles d'y être saisies. Cette protection contre des intrusions ou des attaques peut être réalisée à plusieurs niveaux. Au niveau de la constitution physique du dispositif électronique de saisie de données, son armature peut par exemple consister en un boîtier inviolable, résistant à l'intrusion (« tamper résistant » en anglais), ou laissant trace visible de toute tentative de sabotage (« tamper evident » en anglais), ou encore apportant une réponse adaptée à une détection d'intrusion (« tamper responsive » en anglais). L'utilisation de circuits électroniques gravés dans la masse ou multi couches permet également d'offrir une sécurisation renforcée du dispositif, en complexifiant grandement la tache de personnes malveillantes qui chercheraient à intercepter des données confidentielles au moyen de sondes placées sur certaines connexions du dispositif. Au niveau de la constitution fonctionnelle du dispositif, les données sensibles sont généralement chiffrées et leur traitement est soumis à des protocoles cryptographiques. Enfin, au niveau logiciel, on préfère habituellement utiliser des composantes aptes à être mises en œuvre uniquement au sein de processeurs sécurisés inaccessibles à des tiers.

Une contrepartie de ce niveau de sécurisation important est que la souplesse d'utilisation offerte par de tels dispositifs reste limitée. Faire certifier une application afin qu'elle puisse être autorisée à être exécutée au niveau du processeur sécurisé du dispositif est souvent long et contraignant. Dans un monde riche en équipements électroniques divers tels que téléphones mobiles, assistants personnels ou micro-ordinateurs, un besoin de souplesse comparable se fait sentir pour les dispositifs de saisie de données destinés à être utilisés pour effectuer des opérations qui font intervenir ou portent sur des objets de nature confidentielle, également appelés dispositifs sécurisés. On sait que les systèmes d'exploitation communément dits ouverts offrent une abondance d'applications utiles et conviviales qu'il est intéressant de pouvoir mettre en œuvre pour satisfaire ce besoin de souplesse sur les dispositifs sécurisés. Aussi, de plus en plus de dispositifs électroniques de saisie de données sécurisés comprennent, en plus du processeur sécurisé, un processeur non sécurisé apte à exécuter des applications tierces, par exemple téléchargeables sur une plate-forme de distribution mise à disposition par le fabricant du dispositif. Cette ouverture à d'autres applications logicielles que celles rigoureusement sécurisées a pour inconvénient de mettre potentiellement en péril la sécurité des données saisies sur le dispositif sécurisé. Ainsi une application malveillante (ou polluée par des séquences d'exécution malveillantes), pourrait espionner et trahir des processus sécuritaires de l'équipement, dans le but de récupérer des informations confidentielles. Une application malveillante pourrait également imiter l'apparence d'une application légitime (par exemple une application de paiement) afin de tromper un utilisateur et ainsi récupérer ses informations confidentielles.

Alors que le grand public commence à être sensibilisé vis-à-vis de l'existence de ces techniques frauduleuses sur des terminaux de communication personnels (tablettes, smartphone, micro-ordinateurs, etc.), il n'a pas nécessairement le même niveau de vigilance vis-à-vis de dispositifs plus spécialisés (tels que les terminaux de paiement) qui font pourtant partie intégrante de son quotidien, mais qu'il suppose être sécurisés de par la nature des opérations qui y sont couramment traitées. Ainsi, l'utilisateur a tendance à leur accorder plus naturellement sa confiance, alors même que le risque de se faire voler des données confidentielles y demeure présent.

Il existe donc un besoin de proposer des dispositifs électroniques de saisie de données qui comprennent des moyens permettant d'éviter ou de ralentir des tentatives de récupération frauduleuse de données confidentielles.

Le document de l'art antérieur US2014/0108820-A1 divulgue un procédé dans lequel une communication sécurisée d'entrée d'un utilisateur est effectuée en isolant une partie du dispositif utilisateur de manière à protéger les certificats et clés de chiffrement contre les attaques externes. Le document de l'état de la technique WO2008/114257-A2 divulgue un procédé permettant de détecter une attaque d'une session de communication.

### 3. Résumé de l'invention

La technique proposée offre une solution qui ne présente pas au moins certains de ces problèmes de l'art antérieur, grâce à un procédé original de gestion d'un affichage d'une vue d'une application exécutée sur un processeur non sécurisé d'un dispositif électronique de saisie de données, lequel comprend en outre un processeur sécurisé. L'application considérée délivre au moins une vue courante, comprenant un ensemble de pixels, à afficher sur un écran dudit dispositif. Selon un premier aspect de la technique proposée, ce procédé gestion d'un affichage d'une vue est mis en œuvre sous contrôle du processeur sécurisé, et il comprend :
- une étape d'analyse de ladite vue courante, délivrant au moins une donnée représentative d'une présence d'au moins un motif suspect ;
- lorsqu'une présence d'au moins un motif suspect est détectée au sein de ladite vue courante, une étape de mise en œuvre, par le processeur sécurisé, d'au moins une mesure de protection.

Ainsi, l'étape d'analyse permet d'identifier, au sein d'une vue courante générée par une application en cours d'exécution sur le processeur non sécurisé et destinée à être affichée sur un écran d'un dispositif électronique de saisie de données, des motifs (autrement dit des éléments graphiques) susceptibles de poser un problème de sécurité, par exemple parce qu'ils incitent l'utilisateur dudit dispositif à fournir une information sensible. L'étape de mise en œuvre de mesures de protection permet alors au processeur sécurisé de déployer des moyens visant à empêcher la récupération de ladite information sensible par cette application potentiellement frauduleuse.

Dans un mode de réalisation particulier de la technique proposée, l'étape d'analyse de la vue courante comprend :
- une étape de recherche au sein dudit ensemble de pixels de ladite vue courante (VC), d'au moins un motif graphique, délivrant un ensemble de motifs reconnus ; et/ou
- une étape de reconnaissance de caractères effectuée sur ladite vue courante, délivrant ou complétant un ensemble de motifs reconnus ; et
- une étape de recherche, au sein dudit ensemble de motifs reconnus, d'au moins un motif suspect.

Ainsi des techniques de reconnaissance automatisée permettent d'établir une véritable cartographie de la vue courante, afin d'y détecter des mots ou groupes de mots (reconnaissance de caractères), mais également des catégorie d'objets (reconnaissance d'images et techniques de classification). De cette manière, ces informations brutes (dans le sens où elles ont la forme, en premier lieu, de simples ensembles de pixels) sont traduites en données textuelles plus facilement exploitables par un ordinateur. Ces données textuelles forment un ensemble de motifs reconnus, au sein duquel il est alors possible de rechercher des motifs suspects, par différents moyens.

Dans un mode de réalisation particulier de la technique proposée, l'étape d'analyse de la vue courante est effectuée postérieurement à l'affichage de cette vue courante sur l'écran du dispositif électronique de saisie de données.

Ainsi, l'utilisateur bénéficie d'un affichage rapide de la vue courante sur l'écran du dispositif électronique de saisie de données, l'analyse de cette vue étant mis en œuvre postérieurement à son affichage. L'affichage de la vue générée n'est donc pas retardé par un éventuel temps d'analyse susceptible de provoquer des latences, ralentissements, ou mises en sommeil de l'application exécutée sur le processeur non sécurisé.

Dans un autre mode de réalisation particulier de la technique proposée, l'étape d'analyse de la vue courante est effectuée antérieurement à l'affichage de cette vue courante sur l'écran du dispositif électronique de saisie de données.

De cette manière, le processeur sécurisé peut mettre en ouvre des mesures de protection en lien avec une vue courante suspecte avant même que celle-ci ne soit éventuellement affichée sur un écran du dispositif électronique de saisie de données. L'étape d'analyse de la vue courante est ainsi par exemple effectuée sur une vue virtuelle affichée dans une mémoire vidéo tampon associée au processeur sécurisé, plutôt que directement sur l'écran du dispositif électronique de saisie de données. Le processeur sécurisé peut alors par exemple prendre la décision de bloquer l'affichage de la vue suspecte, ou encore de fournir pour affichage une version expurgée de la vue courante, au sein de laquelle les motifs suspects ont été effacés.

Dans un mode de réalisation particulier de la technique proposée, l'étape d'analyse de la vue courante est mise en œuvre par le processeur sécurisé du dispositif électronique de saisie de données.

De cette manière, l'ensemble du procédé de gestion d'un affichage d'une vue peut être effectué par le processeur sécurisé du dispositif électronique de saisie de données, sans avoir recours à d'éventuelles ressources externes. Ainsi, ce dispositif électronique de saisie de données est autonome pour la mise en œuvre du procédé, et il n'est donc pas dépendant de la disponibilité de ressources externes qui, si elles font défaut, peuvent compromettre la sécurité du dispositif électronique de saisie de données.

Dans un autre mode de réalisation particulier de la technique proposée, l'étape d'analyse de la vue courante est mise en œuvre par un serveur distant, avec lequel ledit processeur sécurisé est apte à communiquer au moyen d'un réseau de communication.

Ainsi, l'étape d'analyse de la vue courante peut être déléguée à un élément externe au dispositif électronique de saisie de données, qui dispose généralement de ressources supérieures à celles disponibles au sein du dispositif électronique de saisie de données. Il dispose par exemple de processeurs plus puissants que le processeur sécurisé embarqué dans le dispositif électronique de saisie de données. De cette manière, l'étape d'analyse de la vue courante peut être effectuée plus rapidement ou de manière plus poussée que si elle avait été mise en œuvre par le processeur sécurisé.

Dans encore un mode de réalisation particulier de la technique proposée, l'étape d'analyse de la vue courante générée par l'application exécutée sur le processeur non sécurisé est mise en œuvre lorsque l'une des conditions suivantes est vérifiée :
- ladite application est absente d'une liste d'applications de confiance prédéfinie ;
- ladite application est présente au sein de cette liste d'applications de confiance prédéfinie, et ladite vue courante est absente d'une liste de vues connues pour ladite application.

De cette manière, seules les vues des applications inconnues ou les vues inconnues d'une application connue sont soumises à l'étape d'analyse. Ainsi, les applications dignes de confiances (qui sont par exemple des applications connues et dont les vues ont été préalablement déclarées au niveau du processeur sécurisé) ne sont pas pénalisées par d'éventuels effets de bord de la mise en œuvre du procédé de gestion d'un affichage décrit. De tels effets de bord peuvent consister par exemple en des ralentissements, des latences, ou des temps de mise en sommeil de l'application, notamment pendant le temps nécessaire à l'exécution de l'étape d'analyse d'une vue (par exemple parce que la phase d'analyse mobilise beaucoup de ressources du dispositif électronique de saisie de données, ou encore parce que l'application exécutée sur le processeur non sécurisé est volontairement bridée tant que cette phase d'analyse n'est pas terminée).

Dans un mode de réalisation particulier de la technique proposée, ladite au moins une mesure de protection mise en œuvre par le processeur sécurisé lorsque la présence d'au moins un motif suspect est détectée au sein de la vue courante appartient au groupe comprenant :
- le non affichage de ladite vue courante sur l'écran dudit dispositif électronique de saisie de données ;
- la suppression ou l'occultation d'au moins une partie de ladite vue courante, sur l'écran dudit dispositif électronique de saisie de données ;
- la non transmission, à ladite application, des données saisies par utilisateur en relation avec ladite vue courante ;
- le blocage de ladite application ;
- le blocage dudit dispositif électronique de saisie de données.

Ainsi le processeur sécurisé dispose de différents moyens, pouvant être utilisés seuls ou de manière complémentaire, pour empêcher une application en cours d'exécution au niveau du processeur non sécurisé d'un dispositif électronique de saisie de données de récupérer des données sensibles d'un utilisateur. Ces moyens reposent notamment sur deux leviers d'action principaux : la suppression de toute incitation à saisir des données confidentielles d'une part, et le blocage des moyens permettant de saisir de telles données ou de les transmettre à l'application suspecte d'autre part.

Dans encore un autre mode de réalisation particulier de la technique proposée, le processeur sécurisé intercepte, au sein d'une mémoire sécurisée, toute saisie effectuée par l'utilisateur sur ledit dispositif électronique de saisie de données pendant toute la durée d'exécution de ladite étape d'analyse de la vue courante.

Ainsi, aucune donnée saisie par l'utilisateur n'est transmise à l'application en cours d'exécution sur le processeur non sécurisé du dispositif électronique de saisie de données, tant que l'étape d'analyse de la vue courante générée par cette application n'est pas terminée. De cette manière, on s'assure que les données saisies par l'utilisateur du dispositif électronique de saisie de données sont sécurisées, même durant la période transitoire où le caractère suspect ou non de la vue courante n'a pas encore été établi.

Dans un mode de réalisation particulier de la technique proposée, le dispositif électronique de saisie de données est un terminal de paiement.

Selon un autre aspect, la technique proposée se rapporte également à un dispositif électronique de saisie de données qui comprend un processeur non sécurisé et un processeur sécurisé, et qui comprend des moyens de gestion d'un affichage d'une vue d'une application exécutée sur le processeur non sécurisé, ladite application délivrant au moins une vue courante, comprenant un ensemble de pixels, à afficher sur un écran dudit dispositif. Un tel dispositif électronique de saisie de données comprend, sous contrôle du processeur sécurisé :
- des moyens d'analyse de ladite vue courante, aptes à délivrer au moins une donnée représentative d'une présence d'au moins un motif suspect ;
- des moyens de mise en œuvre d'au moins une mesure de protection.

Selon une implémentation préférée, les différentes étapes du procédé de gestion d'un affichage d'une vue selon la technique proposée sont mises en œuvre par un ou plusieurs logiciels ou programmes d'ordinateur, comprenant des instructions logicielles destinées à être exécutées par un processeur de données selon la technique proposée et étant conçu pour commander l'exécution des différentes étapes des procédés.

En conséquence, la technique proposée vise aussi un programme, susceptible d'être exécuté par un ordinateur ou par un processeur de données, et en particulier un processeur sécurisé, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

La technique proposée vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon la technique proposée peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, la technique proposée est mise en œuvre au moyen de composants logiciels et/ou matériels. Dans cette optique, le terme « module » peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en œuvre une fonction ou un ensemble de fonctions, selon ce qui est décrit ci-dessous pour le module concerné. Un tel composant logiciel est exécuté par un processeur de données d'une entité physique (terminal, serveur, passerelle, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en œuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Chaque composante du système précédemment décrit met bien entendu en œuvre ses propres modules logiciels.

Les différents modes de réalisation mentionnés ci-dessus sont combinables entre eux pour la mise en œuvre de l'invention.

### 4. Liste des figures

D'autres caractéristiques et avantages de l'invention apparaîtront plus clairement à la lecture de la description suivante d'un mode de réalisation préférentiel de la technique proposée, donné à titre de simple exemple illustratif et non limitatif, et des dessins annexés parmi lesquels :
- la figure 1 décrit un exemple de dispositif électronique de saisie de données apte à mettre en œuvre la technique proposée, dans un mode de réalisation ;
- la figure 2 illustre les étapes mises en œuvre sous contrôle d'un processeur sécurisé d'un dispositif électronique de saisie de données, pour la réalisation du procédé de gestion d'un affichage d'une vue d'une application, selon un mode de réalisation particulier de la technique proposée ;
- la figure 3 décrit une architecture simplifiée d'un environnement d'exécution sécurisé comprenant un processeur sécurisé, au sein duquel le procédé gestion d'un affichage d'une vue d'une application peut être mis en œuvre, selon un mode de réalisation particulier de la technique proposée.

### 5. Description détaillée

### 5.1 Contexte général

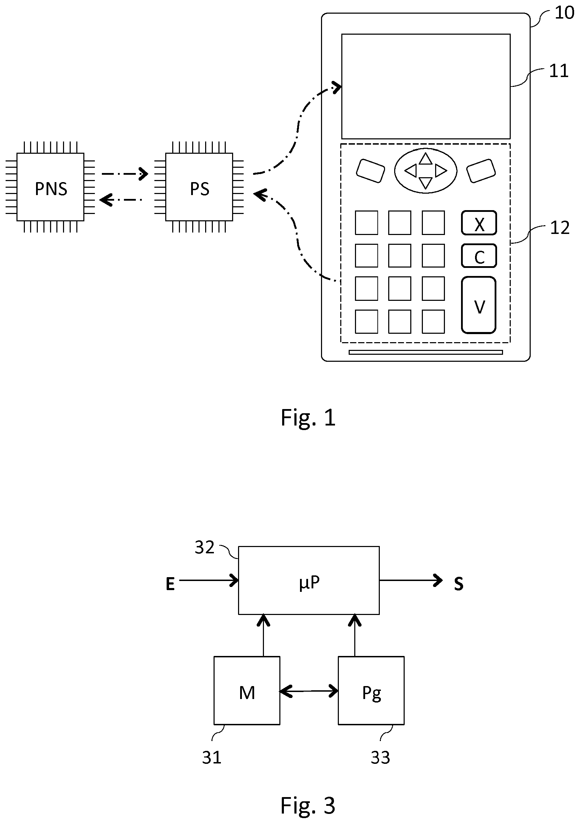

La technique proposée s'applique plus particulièrement aux dispositifs électroniques de saisie de données qui comprennent deux processeurs, un processeur sécurisé, et un processeur non sécurisé. Le processeur sécurisé a accès à une mémoire sécurisée, et l'association de ces deux éléments forme donc un environnement d'exécution sécurisé au sein du dispositif. Par environnement d'exécution sécurisé, on entend une sécurisation qui peut être aussi bien matérielle que logicielle, avec notamment la mise en œuvre des différentes techniques de protection présentées en relation avec l'art antérieur (constitution physique du boitier de protection des composants sécurisés, circuits électroniques gravés dans la masse ou multi couches, chiffrement des données, etc.). Cette sécurisation repose également sur l'utilisation, au niveau du processeur sécurisé, d'un système d'exploitation sécurisé, dans le sens où il dispose d'un ensemble de moyens (de contrôle, de restriction d'accès, cryptographiques, etc.) censé le rendre moins vulnérable et le protéger efficacement face aux différents type d'attaques qu'il pourrait subir. A l'inverse, le système d'exploitation mis en œuvre au sein du processeur non sécurisé du dispositif électronique de saisie de données est un système qui peut être qualifié de «système ouvert », dans le sens où suffisamment d'accès à ce système sont largement diffusés, ce qui favorise le développement de nombreuses applications. La notion de système d'exploitation ouvert englobe donc non seulement les systèmes d'exploitation réellement ouverts tels que le sont les systèmes UNIX et LINUX d'origine, mais également les systèmes à large diffusion commerciale tels que le sont par exemple les différentes versions de Microsoft Windows^{™}. L'intérêt de tels dispositifs - qui comprennent à la fois un processeur sécurisé et un processeur non sécurisé - réside dans leur capacité à pouvoir mettre en œuvre non seulement des applications sécurisées, en ce sens qu'elles ont le plus souvent été certifiées par un organisme de confiance et qu'elles sont autorisées à être exécutées par le processeur sécurisé, mais également des applications tierces, non nécessairement certifiées. Ces applications tierces, exécutées par le processeur non sécurisé, permettent d'enrichir l'expérience utilisateur et ouvrent le dispositif à de nouvelles fonctionnalités. On présente, en relation avec la **figure 1****,** un dispositif électronique de saisie de données (10) de ce type, tel qu'existant dans l'art antérieur. Un tel dispositif (10) comprend le plus souvent un écran (11) permettant d'afficher l'interface graphique d'une application exécutée au sein du dispositif, et un clavier (12) permettant à un utilisateur d'interagir avec ladite application.

Dans un tel dispositif électronique de saisie de données (10), les applications sécurisées sont mises en œuvre par un processeur sécurisé (PS), tandis que les applications tierces, non sécurisées sont mises en œuvre par un processeur non sécurisé (PNS). Le processeur non sécurisé (PNS) est généralement placé sous contrôle du processeur sécurisé (PS), dans une relation de type maitre - esclave. En particulier, toute donnée issue ou à destination du processeur non sécurisé (PNS) transite par le processeur sécurisé (PS). Dans ce cadre, le processeur sécurisé (PS) est notamment capable d'intercepter toute donnée saisie par un utilisateur sur le clavier (12) dudit dispositif, même si la saisie de ces données a été demandée par une application tierce exécutée par le processeur non sécurisé (PNS). De même, toutes les vues successives générées par une application en cours d'exécution sur le processeur non sécurisé (PNS) transitent par le processeur sécurisé (PS). Aussi le processeur sécurisé (PS) est en mesure d'opérer un contrôle de ces vues, qui sont destinées à être affichées sur l'écran (11) du dispositif et qui constituent l'interface de cette application avec l'utilisateur. Parmi ces vues, la vue courante peut être définie comme un ensemble de pixels qu'une application cherche, à un instant considéré de son exécution, à faire afficher sur l'écran du dispositif électronique de saisie de données. Cette vue peut résulter d'une mise en mémoire vidéo d'un ensemble d'objets, par exemple multimédia (texte, image). Lorsqu'un tel dispositif électronique de saisie de données (10) est utilisé pour la réalisation d'une transaction sécurisée impliquant la saisie de données confidentielles (par exemple une opération de paiement), les moyens d'interactions du dispositif avec un utilisateur (tels que l'écran (11), le clavier (12), un lecteur de carte, etc.) passent intégralement sous contrôle du processeur sécurisé (PS). Le processeur non sécurisé (PNS) n'est alors plus autorisé à interagir avec ces éléments, ce qui garantit une sécurisation renforcée de ces opérations sensibles, car seules des applications certifiées exécutées au niveau du processeur sécurisé (PS) ont alors la possibilité d'accéder aux données échangées.

Le dispositif présenté en relation avec la figure 1, qui comprend un clavier physique, est donné à titre purement illustratif et non limitatif. Un dispositif électronique de saisie de données peut comprendre, alternativement ou en complément, un écran tactile. Il arrive également que le dispositif électronique de saisie de données ne comprenne qu'un seul processeur principal, apte à jouer successivement le rôle de processeur sécurisé d'une part et de processeur non sécurisé d'autre part. Dans ce cas, l'environnement d'exécution sécurisé prend la forme d'un mode spécifique d'exécution de ce processeur principal du dispositif électronique de saisie de données.

La technique proposée ici se rapporte à la prévention et à la surveillance de tentatives d'usurpation et de vol d'information par des applications frauduleuses imitant l'apparence visuelle d'applications légitimes. En d'autres termes, elle vise à éviter qu'une application malveillante exécutée sur le processeur non sécurisé d'un dispositif électronique de saisie de données parvienne à tromper un utilisateur, en imitant l'apparence visuelle d'une autre application, par exemple en reproduisant l'interface graphique d'une application de paiement légitime et certifiée traditionnellement exécutée sur le processeur sécurisé du dispositif. Le principe général de la technique proposée consiste donc d'une part à détecter d'éventuelles tentatives d'hameçonnage en lien avec une vue courante générée par une application, et d'autre part, le cas échant, à mettre en œuvre des contre-mesures destinées à protéger l'utilisateur du dispositif électronique de saisie de données, en empêchant l'application de récupérer des données potentiellement confidentielles de cet utilisateur.

### 5.2 Procédé

La technique proposée met en œuvre, au niveau du processeur sécurisé d'un dispositif électronique de saisie de données, un contrôle des vues générées par une application exécutée au niveau du processeur non sécurisé, afin de déterminer si ces vues comprennent des motifs considérés comme suspects. Si c'est le cas, l'application est potentiellement frauduleuse, et il convient de mettre en œuvre des mesures de protection des données qu'un utilisateur pourrait être amené à fournir en lien avec cette application. Par motif suspect, on entend tout élément d'interface graphique (du texte ou des images par exemple), ou toute combinaison de tels éléments d'interface graphique, susceptibles de poser un problème de sécurité en incitant l'utilisateur à fournir une information sensible. Un libellé invitant un utilisateur à saisir un code d'identification personnel est un exemple simple de motif suspect. D'autres exemples sont fournis ultérieurement dans le présent document. La mise en œuvre du procédé proposé doit donc permettre une sécurisation de l'interface présentée à l'utilisateur sur l'écran du dispositif électronique de saisie de données, dans le sens où elle empêche une application suspecte de récupérer des données sensibles de l'utilisateur. La technique proposée se rapporte donc à un procédé de gestion d'un affichage d'une vue d'une application exécutée sur le processeur non sécurisé d'un dispositif électronique de saisie de données.

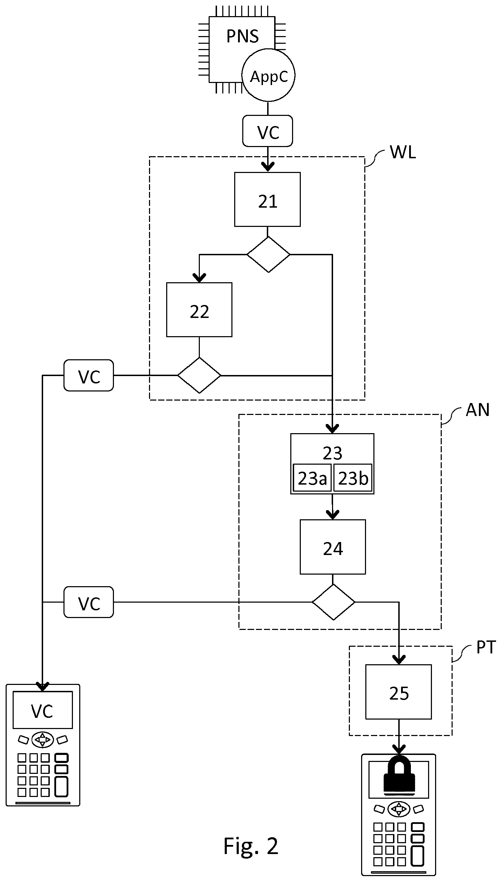

On décrit, en relation avec la **figure 2****,** les étapes mises en œuvre au niveau du processeur sécurisé d'un dispositif électronique de saisie de données, pour la réalisation du procédé de gestion d'un affichage d'une vue, selon un mode de réalisation particulier de la technique proposée. Une application (AppC) est en cours d'exécution au sein du processeur non sécurisé (PNS) du dispositif électronique de saisie de données, et sollicite l'affichage d'une de ses vues, dite vue courante (VC), sur l'écran dudit dispositif.

Le procédé de gestion d'un affichage d'une vue proposé est mis en œuvre sous contrôle du processeur sécurisé, et il comprend deux étapes principales :
- une étape d'analyse (AN) de la vue courante (VC), délivrant au moins une donnée représentative d'une présence d'au moins un motif suspect ;
- lorsqu'une présence d'au moins un motif suspect est détectée au sein de ladite vue courante (VC), une étape de mise en œuvre (PT), par le processeur sécurisé, d'au moins une mesure de protection.

L'étape d'analyse (AN) de la vue courante (VC) a ainsi pour objectif de détecter au sein de cette vue (VC) au moins un motif suspect, susceptible par exemple de poser un problème de sécurité en incitant l'utilisateur à fournir une information sensible, tandis que l'étape de mise en œuvre (PT) d'au moins une mesure de protection vise à empêcher, le cas échéant, la récupération d'une telle information sensible par l'application (AppC) exécutée sur le processeur non sécurisé du dispositif électronique de saisie de données.

Dans le mode de réalisation particulier de la technique proposée exposé en figure 2, une étape supplémentaire, dite étape de confrontation (WL), est réalisée préalablement aux deux étapes principales (AN, PT) déjà présentées. Cette étape de confrontation (WL), optionnelle, sert à confronter l'application (AppC) puis la vue courante (VC) générée par cette application à des listes blanches (ou « whitelist » en anglais), afin d'établir si l'étape d'analyse (AN) doit être mise en œuvre pour la vue courante (VC). Ce mécanisme permet de ne pas pénaliser des applications légitimes et bien connues, en les dispensant d'avoir à soumettre les vues qu'elles génèrent à la phase d'analyse (AN), susceptible d'entraîner des latences, des ralentissements, ou des mises en sommeil de l'application (AppC) le temps de l'exécution de cette phase d'analyse (AN).

Dans toute la suite du document, l'étape de confrontation (WL) aux listes blanches et les deux étapes principales - étape d'analyse(AN) de la vue courante et étape de mise en œuvre (PT) de mesures de protection - sont indifféremment désignées sous le terme « étape » ou « phase ». Le terme « phase » est notamment privilégié à des fins de clarté, afin de mieux distinguer ces étapes des étapes qui les composent.

### 5.2.1 Phase de confrontation aux listes blanches (WL)

Dans un mode de réalisation particulier de la technique proposée, les listes blanches évoquées précédemment en relation avec la phase de confrontation (WL) peuvent prendre la forme d'une structure de données, telle qu'une base de données, qui recense des applications dites de confiance, ainsi que des vues connues associées à chacune de ces applications de confiance. Une telle base de données est par exemple mise à jour par le constructeur du dispositif électronique de saisie de données. Dans une étape de comparaison 21 de cette phase (WL), une comparaison de l'application (AppC) avec la liste d'applications de confiance est effectuée. Cette étape de comparaison 21 peut être effectuée sur la base de différents critères, par exemple un nom ou un identifiant d'application. Lorsque l'application (AppC) est absente de la liste d'applications de confiance, on procède systématiquement à l'analyse de ses vues, et la phase d'analyse (AN) de la vue courante (VC) est donc mise en œuvre. Si au contraire l'application (AppC) est présente dans la liste des applications de confiance, la vue courante (VC) est confrontée, dans une étape de comparaison 22, à la liste de vues connues pour l'application de confiance considérée. Là encore, cette étape de comparaison 22 entre une vue courante et des vues connues peut être effectuée sur la base de différents critères, par exemple sur la base d'un identifiant de vue ou sur la base de techniques éprouvées de comparaison d'images (analyse colorimétrique, analyse spatiale, etc.). Lorsque la vue courante (VC) est présente dans la liste de vues connues pour l'application de confiance considérée, cette vue courante est affichée sur l'écran du dispositif électronique de saisie de données sans que la phase d'analyse (AN) ne soit opérée. On considère en effet dans ce cas de figure que la vue courante (VC) est digne de confiance, et qu'elle peut être présentée à l'utilisateur, via son affichage sur l'écran du dispositif électronique de saisie de données, sans qu'il soit nécessaire de procéder à des contrôles supplémentaires. Si en revanche la vue courante (VC) est absente de la liste des vues connues, la phase d'analyse (AN) de cette vue courante (VC) est mise en œuvre.

À noter que d'autres utilisations de la base de données recensant les applications de confiance et les vues connues peuvent également être envisagées, dans d'autres modes de réalisation particulier de la technique proposée. Par exemple, cette base de données peut servir à détecter des imitations, c'est-à-dire des applications imitant l'apparence d'applications légitimes. On peut ainsi notamment considérer qu'une application donnée est potentiellement une imitation d'une application légitime si cette application ne fait pas partie de la liste des applications de confiance, mais que certaines des vues qu'elle génère sont similaires à des vues présentes dans la liste des vues connues, toutes applications confondues. Si c'est le cas, les mesures de protection des données de l'utilisateur, décrites ultérieurement en relation avec la phase (PT), peuvent alors être mises en œuvre.

Dans un encore un autre mode de réalisation particulier de la technique proposée, l'étape de comparaison 22 de la vue courante (VC) avec une liste de vues connues pour l'application de confiance considérée n'est pas réalisée, et on considère que le seul fait que l'application (AppC) soit une application de confiance est suffisant pour dispenser toute vue générée par cette application de la phase d'analyse (AN).

### 5.2.2 Phase d'analyse (AN)

On présente, toujours en relation avec la figure 2, les différentes étapes mises en œuvre pendant l'étape principale d'analyse (AN) de la vue courante (VC) générée par l'application (AppC).

Dans une étape de cartographie 23 de la vue courante (VC), cette dernière est soumise à différents traitement afin d'y identifier des motifs connus, par exemple des lettres de l'alphabet qui forment des mots ou des groupes de mots, ou encore des objets connus et donc catégorisables. Ainsi, cette étape de cartographie 23 de la vue courante (VC) peut notamment comprendre une étape de reconnaissance de caractères 23a (par exemple une reconnaissance optique de caractères - OCR en anglais, pour « *Optical Character Recognition* »). Alternativement, ou en complément, cette étape de cartographie 23 peut également comprendre une étape de recherche 23b, au sein de l'ensemble de pixels qui forment la vue courante (VC), d'au moins un motif graphique, au moyen par exemple d'un rapprochement statistique d'un élément d'image avec un glyphe connu. Ces techniques de reconnaissance automatisée (techniques de reconnaissance de caractères et techniques de classification) permettent notamment de traduire des images en données textuelles, plus facilement exploitables par un ordinateur. Ainsi, cette étape de cartographie 23 permet d'extraire de la vue courante (VC) un ensemble de motifs reconnus, constitué par exemple de données textuelles représentatives ou bien de mots (ou de groupe de mots) présents dans la vue courante (VC), ou bien de catégories d'objets présents notamment sous forme d'image dans la vue courante (VC).

Les éléments de cet ensemble de motifs reconnus sont ensuite soumis, seuls ou combinés, à une étape de recherche 24 de motifs suspects. Un motif suspect est un élément visuel de l'application (autrement dit un élément d'interface graphique d'une vue courante de l'application), qui est emprunté à une application légitime (similarité visuelle), et qui a par exemple la particularité d'être représentatif d'une incitation, émise à l'égard d'un utilisateur du dispositif, à fournir des données confidentielles.

Si on considère l'exemple d'un terminal de paiement, alors les éléments suivants, s'ils sont présents au sein d'une vue courante générée par une application exécutée sur le processeur non sécurisé du dispositif, peuvent être considérés comme des motifs suspects :
- des chiffres espacés à la manière d'un clavier numérique ;
- un message invitant l'utilisateur à divulguer son code personnel (« Entrez votre code PIN ») ;
- la conjonction d'éléments qui, pris isolément, ne sont pas suspects, mais pris ensemble constituent une tentative de fraude de la part de l'application (par exemple l'affichage en plusieurs parties du message « Entrez votre code PIN »).

Ces exemples sont donnés à titre purement illustratif et non limitatif dans le cadre d'un terminal de paiement, et il peut exister de nombreux autres exemples de motifs suspects, notamment si on considère d'autres types de dispositif électronique de saisie de données.

L'étape de recherche 24, au sein de l'ensemble de motifs reconnus, de motifs suspects peut notamment se baser sur la détection et la combinaison de mots-clés, relatifs par exemple au champ lexical de la saisie d'informations (« saisir », « taper », « renseigner », etc.) ou à celui des données confidentielles (« PIN », « secret », « code », « personnel », « confidentiel », « mot de passe » etc.).

Cette étape de recherche 24 ne se limite cependant pas à de simples comparaisons lexicales, et d'autres techniques complémentaires plus évoluées peuvent également être utilisées, dans d'autres modes de réalisation particuliers de la technique proposée, pour déterminer si une vue courante (VC) est suspecte, par exemple :
- une analyse statistique, exploitant des technologies d'apprentissage, tels que les réseaux bayésiens, et offrant une heuristique quant à la légitimité de la vue courante (VC) analysée ;
- une évaluation de la similarité de l'application avec des applications légitimes connues (applications de confiance), mesurée en comparant les vues générées par l'application (AppC) avec des vues connues associées à ces applications de confiance.

En fonction de leur complexité de mise en œuvre, des ressources qu'elles exigent, et de la pertinence des résultats qu'elles produisent, ces différentes techniques peuvent servir à établir différents degrés de niveau d'analyse d'une vue courante. Ainsi, à titre d'exemple, un niveau d'analyse peu poussé d'une vue courante peut consister en une simple comparaison unitaire des motifs reconnus avec une liste de mots-clés préétablie, tandis qu'un niveau d'analyse plus poussé peut consister en une analyse statistique approfondie de la vue, exploitant des technologies avancées d'apprentissage. Le nombre de techniques d'analyse différentes, mis en œuvre sur une même vue pour déterminer si elle est suspecte, peut également constituer un indicateur d'un niveau d'analyse de ladite vue courante. Le nombre de techniques d'analyse différentes est également adapté en fonction de la puissance de traitement disponible au sein du dispositif.

Lorsque, suite à cette étape de recherche 24 de motifs suspects, il est établi que la vue courante (VC) ne contient pas de motifs suspects, cette vue courante (VC) est considérée comme saine, et elle peut être présentée à l'utilisateur, via un affichage sur l'écran du dispositif électronique de saisie de données.

Si en revanche la recherche de motifs suspects effectuée lors de l'étape de recherche 24 s'avère positive (au moins un motif suspect a effectivement été détecté dans la vue courante), on considère que la vue courante (VC) est suspecte et la phase (PT) de mise en œuvre de mesures de protection peut être déclenchée, afin d'empêcher l'application (AppC) d'obtenir, de la part de l'utilisateur, des informations potentiellement confidentielles.

Dans un autre mode de réalisation particulier de la technique proposée, le niveau d'analyse de la vue courante (VC) est adapté en fonction de caractéristiques propres à l'application (AppC) (différents exemples de niveaux d'analyse plus ou moins poussés ont déjà été donnés précédemment dans le présent document). Le niveau d'analyse effectué peut ainsi par exemple être moins poussé sur les vues générées par une application nouvelle d'un éditeur connu que sur celles générées par une application totalement inconnue, dont l'éditeur n'est pas connu.

Dans le mode de réalisation particulier illustré en figure 2, la phase d'analyse (AN) de la vue courante (VC) est réalisée par le processeur sécurisé du dispositif électronique de saisie de données. Il peut arriver cependant que le processeur sécurisé équipant certains dispositif électronique de saisie de données ne soit pas suffisamment puissant pour opérer, dans des temps raisonnables (c'est à dire des temps acceptables pour l'utilisateur, permettant de ne pas dégrader outre-mesure son expérience utilisateur, par exemple des temps inférieurs à quelques secondes), l'analyse de la vue courante (VC). Aussi, dans un autre mode de réalisation particulier de la technique proposée, la phase d'analyse (AN) de la vue courante (VC) est déléguée à un serveur distant, avec lequel le dispositif électronique de saisie de données est apte à communiquer au moyen d'un réseau de communication. Ce serveur distant dispose idéalement de ressources supérieures à celles disponibles au sein du dispositif électronique de saisie de données (il dispose par exemple de processeurs plus puissants que le processeur sécurisé embarqué dans le dispositif électronique de saisie de données). Dans ce mode de réalisation, le processeur sécurisé transmet la vue courante (VC) au serveur distant, qui se charge de son analyse. Le serveur distant transmet alors en retour au processeur sécurisé le résultat de cette analyse, à savoir une information précisant si la vue courante (VC) est considérée comme suspecte ou non.

Dans un autre mode de réalisation particulier de la technique proposée, les deux mode de réalisation exposés ci-dessus, en lien avec le lieu où est réalisée la phase d'analyse (AN) de la vue courante (VC), sont mis en œuvre de manière complémentaire : le processeur sécurisé effectue par exemple une première phase d'analyse à un niveau superficiel, en se concentrant sur quelques critères simples. Lorsque cette phase d'analyse peu poussée met en évidence la présence potentielle de motifs suspects, la vue courante (VC) est transmise au serveur distant afin que ce dernier la soumette à une analyse plus fine et plus poussée. De cette manière, le serveur distant agit en complément du processeur sécurisé, lorsqu'il est nécessaire de lever un doute quant à la potentielle nature suspecte de la vue courante (VC).

En plus de pouvoir agir sur le niveau (superficiel et/ou poussé) de la phase d'analyse (AN) et sur son lieu de réalisation (processeur sécurisé du dispositif électronique de saisie de données et/ou serveur distant), il est également possible, dans encore d'autres modes de réalisation de la technique proposée, d'agir sur le moment de réalisation de cette phase d'analyse (AN).

Ainsi, dans un mode de réalisation particulier de la technique proposée, la phase d'analyse (AN) de la vue courante (VC) est réalisée avant que cette vue courante (VC) ne soit éventuellement affichée sur un écran du dispositif électronique de saisie de données. Dans ce mode de réalisation, la vue courante (VC) générée par l'application (AppC) est interceptée par le processeur sécurisé du dispositif électronique de saisie de données, puis elle est rendue au sein d'une mémoire vidéo tampon associée à ce processeur sécurisé (ou à un serveur distant auquel est délégué cette analyse). L'étape de cartographie 23 de la phase d'analyse (AN) est alors effectuée sur la vue rendue au sein de cette mémoire vidéo tampon, et non pas sur un affichage réel, sur un écran du dispositif électronique de saisie de données, de cette vue.

Dans un autre mode de réalisation particulier de la technique proposée, la vue courante (VC) est affichée sur l'écran du dispositif électronique de saisie de données, et l'étape de cartographie 23 est effectuée directement sur la vue rendue sur l'écran du dispositif électronique de saisie de données.

Tous ces différents modes de réalisation sont bien entendu combinables entre eux pour la mise en œuvre de la technique proposée.

### 5.2.3 Phase de mise en œuvre des moyens de protection (PT)

Lorsque, suite à la phase d'analyse (AN), il est établi que la vue courante (VC) est suspecte, la phase (PT) de mise en œuvre de mesures de protection est déclenchée, afin d'empêcher l'application (AppC) en cours d'exécution sur le processeur non sécurisé (PNS) d'obtenir, de la part de l'utilisateur, des informations potentiellement confidentielles.

La position privilégiée du processeur sécurisé - et en particulier le fait que toute donnée issue ou à destination du processeur non sécurisé transite par ce processeur sécurisé - est alors exploitée dans une étape de mise en œuvre de ces moyens de protection (25).

Selon différents modes de réalisation particuliers de la technique proposée, deux approches coexistent afin de protéger une information confidentielle d'un utilisateur.

Une première approche consiste à empêcher que cette information soit saisie par l'utilisateur sur le dispositif électronique de saisie de données. Ceci peut être réalisé en bloquant les moyens permettant de saisir des données sur le dispositif électronique de saisie de données (par exemple au moyen du blocage au moins partiel du clavier du dispositif lorsque l'application est en cours d'exécution). Alternativement, un autre moyen de prévenir la saisie d'informations confidentielles est de supprimer toute incitation à le faire : si les éléments incitatifs (par exemple un message demandant la saisie d'un code confidentiel) ne sont jamais présentés à l'utilisateur (soit parce que la vue courante qui les contient n'est pas affichée à l'écran, soit parce que les éléments incitatifs qu'elle contient ont été filtrés et retirés de cette vue avant son affichage), l'utilisateur n'aura aucune raison de saisir de telles informations.

Dans le cas où une information est déjà en cours de saisie ou a déjà été saisie par un utilisateur sur le dispositif électronique de saisie de données, une deuxième approche consiste à empêcher que ces données saisies soient transmises à l'application (AppC), en les bloquant au niveau du processeur sécurisé.

L'approche adoptée pour la mise en œuvre des mesures de protection peut notamment différer en fonction du mode de réalisation implémenté pour la phase d'analyse (AN) de la vue courante (VC). Dans certains modes de réalisation de la technique proposée, ces deux approches peuvent également être mises en œuvre de manière complémentaire.

Ainsi, si la phase d'analyse (AN) est réalisée sur un affichage virtuel de la vue courante (VC), alors rendue dans une mémoire vidéo tampon du dispositif électronique de saisie de données (ou d'un serveur distant), le processeur sécurisé peut, dans un mode de réalisation particulier de la technique proposée, empêcher le rendu de la vue courante (VC) sur l'écran dudit dispositif si cette vue est suspecte. De cette manière, une vue suspecte ou frauduleuse n'est jamais présentée à l'utilisateur, et ce dernier n'a alors aucune incitation à saisir des informations confidentielles sur le dispositif électronique de saisie de données. Alternativement, seuls les éléments d'interface susceptibles d'inciter l'utilisateur du dispositif électronique de saisie de données à saisir une donnée confidentielle (autrement dit les motifs suspects) peuvent être filtrés - dans le sens retirés - de la vue courante (VC), avant son affichage sur l'écran dudit dispositif.

Dans le cas où la phase d'analyse (AN) est réalisée directement sur la vue affichée sur l'écran du dispositif électronique de saisie de données, et non sur une vue affichée virtuellement dans une mémoire vidéo tampon, le processeur sécurisé peut agir sur la vue courante (VC) présente à l'écran dès lors qu'il a été établi qu'il s'agit d'une vue suspecte. La vue courante peut ainsi par exemple être intégralement effacée de l'écran. Alternativement, seuls les éléments incitatifs à la saisie d'informations confidentielles (autrement dit les motifs suspects) peuvent être effacés.

Dans certains cas, l'utilisateur a pu avoir accès à la vue courante (VC), car celle-ci a été affichée, même brièvement, sur l'écran du dispositif électronique de saisie de données. C'est par exemple le cas pendant la durée d'exécution de la phase d'analyse (AN), lorsque celle-ci est réalisée directement sur la vue affichée sur l'écran du dispositif électronique de saisie de données. C'est également le cas si l'exécution du procédé n'est enclenchée qu'au moment où l'utilisateur effectue une saisie de donnée en lien avec la vue courante (VC). Une autre mesure de protection peut consister alors à empêcher la transmission, à l'application (AppC) de toute donnée saisi par l'utilisateur sur le dispositif électronique de saisie de données, en interceptant ces données au niveau du processeur sécurisé. Tant que l'analyse de la vue courante (VC) n'est pas terminée, ces données sont par exemple retenues dans une mémoire sécurisée associée au processeur sécurisé. Une fois cette analyse effectuée, s'il est établi que la vue courante (VC) est suspecte, le processeur sécurisé supprime les données saisies retenues au niveau de cette mémoire sécurisée, ainsi que toute nouvelle donnée saisie en relation avec la vue courante (VC). Ces données, qui sont potentiellement des informations confidentielles d'un utilisateur, ne sont ainsi jamais transmises à l'application suspecte (AppC). Si en revanche il s'avère que la vue courante (VC) n'est pas suspecte, les données retenues au niveau de la mémoire sécurisée associée au processeur sécurisé sont libérées et transmises à l'application (AppC), de même que toute donnée nouvellement saisie en relation avec la vue courante (VC) affichée à l'écran.

Ces différentes mesures de protection, qui constituent autant de modes de réalisation particuliers de la technique proposée, peuvent être déployées indépendamment les unes des autres ou de manière complémentaire. Alternativement, ou dans certains cas graves sans ambiguïté, il est possible que le processeur sécurisé décide de bloquer l'application (AppC) dans son intégralité, voire le dispositif électronique de saisie de données tout entier, par exemple si ce dernier est considéré comme compromis. En cas de détection d'une vue suspecte, un message destiné à avertir l'utilisateur que l'application (AppC) est potentiellement frauduleuse peut-être affiché sur l'écran du dispositif électronique de saisie de données, en lieu et place de la vue courante (VC) ou des motifs suspects qui y ont été détectés.

### 5.2.4 Mise en œuvre du procédé

Le procédé de gestion d'un affichage d'une vue précédemment décrit est mis en œuvre sous contrôle du processeur sécurisé du dispositif électronique de saisie de données, par exemple au moyen d'une application ou d'un processus sécurisé dédié (différent de l'application (AppC)) exécuté au sein de ce processeur sécurisé, ledit application ou processus sécurisé dédié étant constamment « à l'écoute », en tâche de fond. Il est réalisé à chaque fois qu'une vue est générée par l'application (AppC), permettant ainsi de sécuriser l'ensemble de l'interface entre l'utilisateur et cette application (AppC). Par l'expression « procédé mis en œuvre sous contrôle du processeur sécurisé », on entend que le procédé peut être réalisé ou bien intégralement par le processeur sécurisé ; ou bien conjointement par le processeur sécurisé et au moins un élément externe au dispositif électronique de saisie de données, mais avec lequel le processeur sécurisé est seul habilité à communiquer. Cet élément externe peut par exemple être un serveur distant, auquel a pu être déléguée la phase (WL) de confrontation aux listes blanches et/ou la phase (AN) d'analyse de la vue courante (VC).

Selon différents modes de réalisation de la technique proposée, l'exécution du procédé de gestion d'un affichage d'une vue peut être déclenchée à différents moments après qu'une vue ait été générée par l'application (AppC). Ainsi, le procédé peut par exemple débuter dès que l'application (AppC) a généré la vue courante (VC) et sollicite son affichage sur un écran du dispositif électronique de saisie de données, mais avant que cet affichage ne soit effectivement réalisé. Alternativement, le procédé peut débuter seulement une fois la vue courante (VC) affichée sur l'écran du dispositif. Dans encore un mode de réalisation particulier de la technique proposée, le procédé peut être mis en œuvre non seulement après l'affichage de la vue courante (VC) sur l'écran du dispositif électronique de saisie de données, mais également après que l'utilisateur entame une saisie d'information en lien avec cette vue courante (VC) sur un dispositif de saisie (par exemple un clavier physique ou tactile) du dispositif électronique de saisie de données (dans ce dernier cas en particulier, les données saisies sont retenues au niveau du processeur sécurisé du dispositif électronique de saisie de données, tant que la phase d'analyse de la vue courante (VC) n'est pas terminée).

### 5.3 Dispositif

Le procédé de gestion d'un affichage d'une vue précédemment exposé est mis en œuvre au sein d'un dispositif électronique de saisie de données qui comprend, dans un mode de réalisation particulier de la technique proposée, deux processeurs : un processeur sécurisé pour la mise en œuvre d'applications sécurisées, et un processeur non sécurisé pour la mise en œuvre d'application tierces non sécurisées (alternativement, et dans un autre mode de réalisation particulier de l'invention, le dispositif électronique de saisie de données peut n'embarquer qu'un seul processeur principal, apte à jouer successivement les rôles de processeur sécurisé et de processeur non sécurisé, sans que cela remette en cause le principe général de l'invention).

Selon la technique proposée, un tel dispositif comprend, dans un mode de réalisation particulier, des moyens d'analyse d'une vue courante générée par une application en cours d'exécution sur le processeur non sécurisé, de façon à y détecter au moins un motif, dit motif suspect, susceptible de poser un problème de sécurité en incitant ledit utilisateur à fournir une information sensible. Alternativement, le dispositif électronique de saisie de données peut comprendre des moyens d'accès à des ressources externes (par exemple un serveur distant) aptes à mettre en œuvre une telle analyse.

Selon la technique proposée, le dispositif électronique de saisie de données comprend également des moyens de mise en œuvre de mesures de protection visant à empêcher la récupération de telles informations sensibles par l'application, si la phase d'analyse de la vue courante a permis d'établir qu'elle contient des motifs suspects.

Le procédé de gestion d'un affichage d'une vue est plus particulièrement mis en œuvre sous contrôle du processeur sécurisé du dispositif électronique de saisie de données, au niveau d'un environnement d'exécution sécurisé tel que celui présenté en relation avec la **figure 3****.**

Par exemple, l'environnement d'exécution sécurisé comprend une mémoire sécurisée (31) constituée d'une mémoire tampon, une unité de traitement (32), équipée par exemple du processeur sécurisé, et pilotée par le programme d'ordinateur sécurisé (33), mettant en œuvre les étapes nécessaires à la gestion d'un affichage d'une vue d'une application exécutée sur le processeur non sécurisé, selon la technique proposée.

À l'initialisation, les instructions de code du programme d'ordinateur (33) sont par exemple chargées dans une mémoire avant d'être exécutées par le processeur sécurisé de l'unité de traitement (32). L'unité de traitement (32) reçoit en entrée (E) par exemple une vue (autrement dit un ensemble de pixels) générée par une application en cours d'exécution sur le processeur non sécurisé du dispositif électronique de saisie de données, vue pour laquelle ladite application sollicite un affichage sur un écran dudit dispositif. Le processeur sécurisé de l'unité de traitement (32) met alors en œuvre les étapes du procédé de gestion d'un affichage d'une vue, selon les instructions du programme d'ordinateur (33), et notifie en sortie (S) les éventuelles mesures de protection à appliquer pour empêcher la récupération d'informations sensibles par ladite application, si cette dernière s'avère potentiellement frauduleuse.

Pour cela, l'environnement d'exécution sécurisé comprend, outre la mémoire sécurisée (31), des moyens de transmission/réception de données, qui permettent d'une part l'échange de données en provenance d'un dispositif de saisie (par exemple un clavier) et à destination d'un dispositif de restitution (par exemple un écran) du dispositif électronique de saisie de données, et d'autre part l'échange de données avec un processeur non sécurisé du dispositif électronique de saisie de données. Ainsi, l'environnement d'exécution sécurisé est notamment apte à intercepter les données en provenance ou à destination d'une application exécutée sur le processeur non sécurisé du dispositif électronique de saisie de données. Ces moyens de transmission/réception de données peuvent se matérialiser sous la forme d'interfaces de connexion logicielles ou d'interfaces matérielles. Selon la technique proposée, un tel environnement d'exécution sécurisé comprend en outre des moyens de stockage qui peuvent prendre la forme d'une base de données ou d'un ensemble de fichiers de configuration, ou un accès à de tels moyens de stockage. Ces moyens de stockage peuvent notamment héberger une liste d'applications prédéterminée, qui recense les applications auxquelles on attribue une confiance supplémentaire, et qu'on ne souhaite pas pénaliser par une phase d'analyse. Ces moyens de stockages hébergent également, pour chacune de ces applications de confiance, une liste de vues connues qui sert de base de comparaison pour déterminer si la vue générée par une application est considérée comme digne de confiance (auquel cas on ne procède pas à l'analyse de la vue) ou pas (auquel cas, même si l'application est connue, on procède à l'analyse de la vue, dans un mode de réalisation particulier de la technique proposée). Ces listes d'applications et de vues de référence sont par exemple mises à jour par le constructeur du dispositif électronique de saisie de données. Dans certains modes de réalisation particuliers de la technique proposée, l'environnement d'exécution sécurisée comprend également des moyens de transmission/réception de données qui peuvent se matérialiser sous la forme d'une interface de connexion à un ou plusieurs réseaux de communication, ces moyens permettant éventuellement d'établir une liaison sécurisée avec au moins un serveur distant, en charge de procéder à l'analyse des vues générées par une application exécutée sur le processeur non sécurisé, lorsque cette analyse n'est pas réalisée au sein même du dispositif électronique de saisie de données. La confrontation de l'application et des vues générées à des listes blanches peut également, dans certains modes de réalisation particulier de la technique proposée, être déléguée à un élément externe au dispositif électronique de saisie de données, tel qu'un tel serveur distant. Ces interfaces de connexion peuvent prendre la forme d'interfaces logicielles ou d'interfaces matérielles (de type carte réseau ou modules matériels de communication réseau). Enfin, dans certains modes de réalisation particuliers de la technique proposée, l'environnement d'exécution sécurisé peut également comprendre une mémoire vidéo tampon sécurisée, au sein de laquelle une vue générée par l'application peut être rendue, préalablement à un éventuel affichage réel sur un écran du dispositif électronique de saisie de données.

Dans un mode de réalisation particulier de la technique proposé, le dispositif électronique de saisie de données est un terminal de paiement.

## Revendications

1. Procédé de gestion d'un affichage d'une vue d'une application (AppC), ladite application (AppC) étant exécutée sur un processeur non sécurisé (PNS) d'un dispositif électronique de saisie de données qui comprend en outre un processeur sécurisé, ladite application (AppC) délivrant au moins une vue courante (VC), comprenant un ensemble de pixels, à afficher sur un écran dudit dispositif, ledit procédé comprenant, sous contrôle dudit processeur sécurisé, une étape d'analyse (AN) de ladite vue courante (VC), délivrant au moins une donnée représentative d'une présence d'au moins un motif suspect, ladite étape d'analyse (AN) étant mise en œuvre par un serveur distant avec lequel ledit processeur sécurisé est apte à communiquer au moyen d'un réseau de communication et/ou par ledit processeur sécurisé du dispositif électronique de saisie de données, ledit procédé étant **caractérisé en ce que** ladite étape d'analyse est mise en œuvre lorsque l'une des conditions suivantes est vérifiée :
- ladite application est absente d'une liste d'applications de confiance prédéfinie ;
- ladite application est présente au sein de ladite liste d'applications de confiance prédéfinie, et ladite vue courante est absente d'une liste de vues connues pour ladite application ; et
ledit procédé étant également **caractérisé en ce qu'**il comprend, lorsqu'une présence d'au moins un motif suspect est détectée au sein de ladite vue courante (VC), une étape de mise en œuvre (PT), par le processeur sécurisé, d'au moins une mesure de protection.

2. Procédé de gestion d'un affichage selon la revendication 1 **caractérisé en ce que** ladite étape d'analyse (AN) comprend les étapes suivantes :
- une étape de recherche au sein dudit ensemble de pixels de ladite vue courante (VC), d'au moins un motif graphique, délivrant un ensemble de motifs reconnus ; et/ou
- une étape de reconnaissance de caractères effectuée sur ladite vue courante, délivrant ou complétant un ensemble de motifs reconnus ; et
- une étape de recherche, au sein dudit ensemble de motifs reconnus, d'au moins un motif suspect.

3. Procédé de gestion d'un affichage selon la revendication 1 caractérisé ladite étape d'analyse (AN) est effectuée postérieurement à l'affichage de ladite vue courante sur ledit écran dudit dispositif.

4. Procédé de gestion d'un affichage selon la revendication 1 **caractérisé en ce que** ladite d'analyse (AN) est effectuée sur une vue rendue dans une mémoire vidéo tampon antérieurement à l'affichage de ladite vue courante sur ledit écran dudit dispositif.

5. Procédé de gestion d'un affichage selon la revendication 1, **caractérisé en ce que** ladite au moins une mesure de protection mise en œuvre par le processeur sécurisé lorsque la présence d'au moins un motif suspect est détectée au sein de ladite vue courante appartient au groupe comprenant :
- le non affichage de ladite vue courante sur l'écran dudit dispositif électronique de saisie de données ;
- la suppression ou l'occultation d'au moins une partie de ladite vue courante, sur l'écran dudit dispositif électronique de saisie de données ;
- la non transmission, à ladite application, des données saisies par utilisateur en relation avec ladite vue courante ;
- le blocage de ladite application ;
- le blocage dudit dispositif électronique de saisie de données.

6. Procédé de gestion d'un affichage selon la revendication 1 caractérisé en ce le processeur sécurisé intercepte, au sein d'une mémoire sécurisée, toute saisie effectuée par l'utilisateur sur ledit dispositif électronique de saisie de données pendant toute la durée d'exécution de ladite étape d'analyse (AN) de la vue courante.

7. Procédé de gestion d'un affichage selon la revendication 1 caractérisé en ce ledit dispositif électronique de saisie de données est un terminal de paiement.

8. Dispositif électronique de saisie de données comprenant un processeur non sécurisé et un processeur sécurisé, et comprenant des moyens de gestion d'un affichage d'une vue d'une application exécutée sur le processeur non sécurisé, ladite application délivrant au moins une vue courante, comprenant un ensemble de pixels, à afficher sur un écran dudit dispositif, ledit dispositif comprenant, sous contrôle du processeur sécurisé, des moyens d'analyse de ladite vue courante et/ou des moyens de communication avec un serveur distant apte à analyser ladite vue courante, aptes à délivrer au moins une donnée représentative d'une présence d'au moins un motif suspect, ledit dispositif étant **caractérisé en ce que** lesdits moyens d'analyse sont mis en œuvre lorsque l'une des conditions suivantes est vérifiée :
- ladite application est absente d'une liste d'applications de confiance prédéfinie ;
- ladite application est présente au sein de ladite liste d'applications de confiance prédéfinie, et ladite vue courante est absente d'une liste de vues connues pour ladite application ; et
ledit dispositif étant également **caractérisé en ce qu'**il comprend des moyens de mise en œuvre, par le processeur sécurisé, d'au moins une mesure de protection.

9. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution d'un procédé de gestion d'un affichage d'une vue selon l'une quelconque des revendications 1 à 7, lorsqu'il est exécuté sur un ordinateur.

## Patentansprüche

1. Verfahren zum Verwalten einer Anzeige einer Ansicht einer Anwendung (AppC), wobei die Anwendung (AppC) auf einem nicht gesicherten Prozessor (PNS) einer elektronischen Dateneingabevorrichtung ausgeführt wird, die ferner einen gesicherten Prozessor aufweist, wobei die Anwendung (AppC) mindestens eine aktuelle Ansicht (VC) bereitstellt, die einen Satz von Pixeln aufweist, die auf einem Bildschirm der Vorrichtung angezeigt werden soll, wobei das Verfahren unter Steuerung des gesicherten Prozessors einen Analyseschritt (AN) der aktuellen Ansicht (VC) aufweist, der mindestens eine Dateneinheit bereitstellt, die für eine Anwesenheit mindestens eines verdächtigen Musters repräsentativ ist, wobei der Analyseschritt (AN) durch einen Remote-Server umgesetzt wird, mit dem der gesicherte Prozessor geeignet ist, mittels eines Kommunikationsnetzes und/oder durch den gesicherten Prozessor der elektronischen Dateneingabevorrichtung zu kommunizieren,
wobei das Verfahren **dadurch gekennzeichnet ist, dass** der Analyseschritt umgesetzt wird, wenn eine der folgenden Bedingungen erfüllt ist:
- die Anwendung ist in einer Liste vordefinierter vertrauenswürdiger Anwendungen nicht enthalten,
- die Anwendung ist in der Liste vordefinierter vertrauenswürdiger Anwendungen enthalten und die aktuelle Ansicht ist in einer Liste von Ansichten, die für die Anwendung bekannt sind, nicht enthalten und
wobei das Verfahren ebenfalls **dadurch gekennzeichnet ist, dass**,
- wenn eine Anwesenheit mindestens eines verdächtigen Musters in der aktuellen Ansicht (VC) erkannt wird, einen Schritt des Umsetzens (PT) mindestens einer Schutzmaßnahme durch den gesicherten Prozessor.

2. Verfahren zum Verwalten einer Anzeige nach Anspruch 1, **dadurch gekennzeichnet, dass** der Analyseschritt (AN) die folgenden Schritte aufweist:
- einen Schritt des Suchens nach mindestens einem grafischen Muster innerhalb des Satzes von Pixeln der aktuellen Ansicht (VC), der einen Satz erkannter Muster bereitstellt, und/oder
- einen Zeichenerkennungsschritt, der an der aktuellen Ansicht ausgeführt wird, der einen Satz erkannter Muster bereitstellt oder ergänzt, und
- einen Schritt des Suchens innerhalb des erkannter Muster nach mindestens einem verdächtigen Muster.

3. Verfahren zum Verwalten einer Anzeige nach Anspruch 1, **dadurch gekennzeichnet, dass** der Analyseschritt (AN) nach dem Anzeigen der aktuellen Ansicht auf dem Bildschirm des Geräts ausgeführt wird.

4. Verfahren zum Verwalten einer Anzeige nach Anspruch 1, **dadurch gekennzeichnet, dass** die Analyse (AN) an einer Ansicht vorgenommen wird, die in einem Videopufferspeicher vor dem Anzeigen der aktuellen Ansicht auf dem Bildschirm des Geräts wiedergegebenen wird.

5. Verfahren zum Verwalten einer Anzeige nach Anspruch 1, **dadurch gekennzeichnet, dass** mindestens eine Schutzmaßnahme durch den gesicherten Prozessor umgesetzt wird, wenn die Anwesenheit mindestens eines verdächtigen Musters in der aktuellen Ansicht erkannt wird, das zu der Gruppe gehört, umfassend:
- das Nichtanzeigen der aktuellen Ansicht auf dem Bildschirm der elektronischen Dateneingabevorrichtung,
- das Löschen oder Verschleiern mindestens eines Teils der aktuellen Ansicht auf dem Bildschirm der elektronischen Dateneingabevorrichtung,
- das Nichtübertragen von Daten, die vom Benutzer in Bezug auf die aktuelle Ansicht eingegeben wurden, an die Anwendung,
- das Blockieren der Anwendung,
- das Blockieren der elektronischen Dateneingabevorrichtung.

6. Verfahren zum Verwalten einer Anzeige nach Anspruch 1, **dadurch gekennzeichnet, dass** der gesicherte Prozessor in einem gesicherten Speicher jede Eingabe abfängt, die vom Benutzer auf der elektronischen Dateneingabevorrichtung während der gesamten Dauer der Ausführung des Analyseschritts (AN) vorgenommen wird.

7. Verfahren zum Verwalten einer Anzeige nach Anspruch 1, **dadurch gekennzeichnet, dass** die elektronische Dateneingabevorrichtung ein Zahlungsendgerät ist.

8. Elektronische Dateneingabevorrichtung, umfassend einen nicht gesicherten Prozessor und einen gesicherten Prozessor und umfassend Mittel zum Verwalten einer Anzeige einer Ansicht einer Anwendung, die auf einem nicht gesicherten Prozessor ausgeführt wird, wobei die Anwendung mindestens eine aktuelle Ansicht bereitstellt, die einen Satz von Pixeln aufweist, die auf einem Bildschirm der Vorrichtung angezeigt werden soll, wobei die Vorrichtung unter Steuerung des gesicherten Prozessors Analysemittel der aktuellen Ansicht und/oder Kommunikationsmittel mit einem Remote-Server aufweist, der geeignet ist, die aktuelle Ansicht zu analysieren, die geeignet sind, mindestens eine Dateneinheit bereitzustellen, die für eine Anwesenheit mindestens eines verdächtigen Musters repräsentativ ist,
wobei die Vorrichtung **dadurch gekennzeichnet ist, dass** die Analysemittel eingesetzt werden, wenn eine der folgenden Bedingungen erfüllt ist:
- die Anwendung ist in einer Liste vordefinierter vertrauenswürdiger Anwendungen nicht enthalten,
- die Anwendung ist in der Liste vordefinierter vertrauenswürdiger Anwendungen enthalten und die aktuelle Ansicht ist in einer Liste von Ansichten, die für die Anwendung bekannt sind, nicht enthalten und
wobei die Vorrichtung **dadurch gekennzeichnet ist, dass** sie
- Mittel zum Umsetzen mindestens einer Schutzmaßnahme durch den gesicherten Prozessor aufweist.

9. Computerprogrammprodukt, das von einem Kommunikationsnetz herunterladbar ist und/oder auf einem computerlesbaren Aufzeichnungsmedium gespeichert ist und/oder von einem Mikroprozessor ausführbar ist, **dadurch gekennzeichnet, dass** es Programmcodeanweisungen zum Ausführen eines Verfahrens zum Verwalten einer Anzeige nach einem der Ansprüche 1 bis 7 aufweist, wenn es auf einem Computer ausgeführt wird.

## Claims

1. Method for the management of a display of a view of an application (AppC), said application being executed on a non-secured processor (PNS) of an electronic data entry device that furthermore comprises a secured processor, said application (AppC) delivering at least one current view (VC), comprising a set of pixels, to be displayed on a screen of said device, said method comprising, under the control of said secured processor a step of analysis (AN) of said current view (VC), delivering at least one piece of data representing a presence of at least one suspect pattern, said step of analysis (AN) being implemented by a remote server with which said secured processor is capable of communicating by means of a communications network and/or by said secured processor of the electronic data entry device, said method being **characterized in that** said step of analysis is implemented when one of the following conditions is verified:
- said application is absent from a predefined list of trusted applications;
- said application is present in said predefined list of trusted applications, and said current view is absent from a list of known views for said application; and
said method being further **characterized in that** it comprises, when a presence of at least one suspect pattern is detected within said current view (VC), a step of implementation (PT) by the secured processor of at least one protection measure.

2. Method for the management of a display according to claim 1 **characterized in that** said step of analysis (AN) comprises the following steps:
- a step of searching, within said set of pixels of said current view (VC), for at least one graphic pattern, delivering a set of recognized patterns; and/or
- a step of character recognition performed on said current view, delivering or complementing a set of recognized patterns; and
- a step of searching, within said set of recognized patterns, for at least one suspect pattern.

3. Method for the management of a display according to claim 1 **characterized in that** said step of analysis (AN) is performed subsequently to the display of said current view on said screen of said device.

4. Method for the management of a display according to claim 1 **characterized in that** said step of analysis (AN) is performed on a view rendered within a buffer video memory, prior to the display of said current view on said screen of said device.

5. Method for the management of a display according to claim 1, **characterized in that** said at least one protection measure, implemented by the secured processor when the presence of at least one suspect pattern is detected within the current view, belongs to the group comprising:
- the non-display of said current view on the screen of said electronic data entry device;
- the elimination or concealment of at least one part of said current view on the screen of said electronic data entry device;
- the non-transmission, to said application, of the data entered by the user in relation with said current view;
- the blocking of said application;
- the blocking of said electronic data entry device.

6. Method for the management of a display according to claim 1 **characterized in that** said secured processor intercepts, within a secured memory, any entry made by the user on said electronic data entry device throughout the time of execution of said step of analysis (AN) of the current view.

7. Method for the management of a display according to claim 1 **characterized in that** said electronic data entry device is a payment terminal.

8. Electronic data entry device comprising a non-secured processor and a secured processor, and comprising means for managing a display of a view of an application executed on the non-secured processor, said application delivering at least one current view, comprising a set of pixels to be displayed on a screen of said device, said device comprising, under the control of the secured processor, means of analysis said current view and/or means for communicating with a remote server capable of analyzing said current view, capable of delivering at least one piece of data representing a presence of at least one suspect pattern, said device being **characterized in that** said means of analysis are operated when one of the following conditions is verified:
- said application is absent from a predefined list of trusted applications;
- said application is present in said predefined list of trusted applications, and said current view is absent from a list of known views for said application; and
said device being further **characterized in that** it comprises means for implementing, by the secured processor, at least one protection measure.

9. Computer program product downloadable from a communications network and/or stored on a computer-readable medium and/or executable by a microprocessor, **characterized in that** it comprises program code instructions for executing a method for managing a display of a view according to any one of the claims 1 to 7, when it is executed on a computer.
